# DEMANDE DE BREVET EUROPEEN

(11) **EP 1 095 798 A1**
(43) Date de publication de la demande: **02.05.2001**
(21) Numéro de dépôt: 01100660.8
(22) Date de dépôt: 17.02.1999
(51) Int. Cl.: B60C 19/08, B29C 47/32, B29C 47/56, B60C 11/18, B29C 47/14

(54) **Appareillage d'extrusion de profilés conducteurs**

(30) Priorité: 26.02.1998 FR 9802462
(62) Demande divisionnaire de: 99913169.1
(71) Demandeur: Compagnie Générale des Etablissements MICHELIN-MICHELIN & CIE, 63040 Clermont-Ferrand Cedex 09 (FR)
(72) Inventeur: Calvar, Didier, 63110 Beaumont (FR); Nicolas, Serge, 63100 Clermont-Ferrand (FR); Bardy, Daniel, 63100 Clermont-Ferrand (FR)
(74) Mandataire: Diernaz, Christian

(57) **Abrégé**

" L'appareillage pour extruder une couche, munie d'un insert conducteur, comprend une extrudeuse principale (10) avec nez à rouleau (15) pour extruder ladite couche (31, 32) non vulcanisée, et une micro-extrudeuse (40), montée de manière fixe sur un support (41), ladite micro-extrudeuse (40) comprenant une tête d'extrusion (402), munie à son extrémité d'une buse (403), tête et buse étant placées dans un élément de l'extrudeuse principale (10). Une telle couche est utilisée dans un pneumatique comprenant une bande de roulement (3) composée de deux couches (31, 32), chaque couche (31, 32) contenant un insert circonférentiel (11, 12) de mélange conducteur, au moins une des couches étant pourvue d'un insert, présentant, vu en section transversale, une surface S à deux bases et dont la première base, sur la paroi de contact (310) entre les deux parties, a une largeur E au moins égale à 10 fois la largeur e' de la première base sur ladite surface (310) de la surface S' de l'insert (11,12) de la deuxième couche (31, 32), les dites premières bases étant sur la paroi commune de contact (310) en regard l'une de l'autre.

## Description

La présente invention a pour objet un pneumatique possédant plusieurs mélanges comprenant à titre de charge majoritaire une charge non conductrice telle que la silice, ou mélanges faiblement chargés en noir, au moins un de ces mélanges étant la bande de roulement. Elle concerne plus particulièrement un pneumatique pouvant présenter en roulage des élévations de températures internes non négligeables, tel qu'un pneumatique destiné, par exemple, à porter de lourdes charges. Elle concerne aussi un procédé destiné à l'obtention d'un tel pneumatique, et un appareillage en vue de la mise en oeuvre d'un tel procédé.

Les problèmes d'environnement étant de plus en plus cruciaux, les économies de carburant et la lutte contre les nuisances créées par les véhicules à moteur étant devenues une priorité, un des objectifs des manufacturiers de pneumatiques est de réaliser un pneumatique possédant à la fois une très faible résistance au roulement, une excellente adhérence tant sur sol sec que sur sol humide ou enneigé ou verglacé, une très bonne résistance à l'usure, et enfin un bruit de roulement réduit.

Pour atteindre cet objectif, il a été proposé dans la demande de brevet européen EP A 501 227, un pneumatique possédant une bande de roulement comportant à titre de charge renforçante principale de la silice. Si cette solution permet d'obtenir le meilleur compromis entre l'ensemble des propriétés très contradictoires mentionnées ci-dessus, il s'est cependant avéré qu'en fonction des véhicules, les pneumatiques mettant en oeuvre une bande de roulement comportant à titre de charge renforçante principale de la silice présentent l'inconvénient d'accumuler à un degré plus ou moins important l'électricité statique qui se forme par friction du pneumatique sur la route lors du roulage du véhicule en raison de l'absence de conductivité électrique de la silice.

L'électricité statique ainsi accumulée dans un pneumatique est susceptible de provoquer, lorsque certaines conditions particulières sont réunies, un désagréable choc électrique à l'occupant d'un véhicule, lorsqu'il est amené à toucher la carrosserie du véhicule. Elle est en outre susceptible de hâter le vieillissement du pneumatique en raison de l'ozone générée par la décharge électrique. Elle peut aussi être à l'origine, en fonction de la nature du sol et du véhicule, d'un mauvais fonctionnement de la radio embarquée dans le véhicule en raison des interférences qu'elle génère.

Ce problème d'accumulation d'électricité statique dans un pneumatique et de la plupart des inconvénients qui y sont liés est fort ancien et s'est déjà posé lorsque la charge renforçante utilisée était du noir de carbone.

La demande EP 0 658 452 A1 décrit l'adaptation de principes connus de longue date à un pneumatique dit moderne, adaptation qui permet de résoudre les principaux problèmes afférents aux solutions proposées dans différents documents anciens et en particulier les hétérogénéités néfastes introduites dans les architectures de pneumatique. La solution proposée consiste à insérer une bande de mélange caoutchouteux conducteur ou insert, s'étendant préférentiellement sur toute la circonférence du pneumatique et reliant la surface de la bande de roulement soit à l'une des nappes de sommet, soit à l'armature de carcasse. soit à tout autre partie du pneumatique suffisamment conductrice de l'électricité, la nécessaire conductivité électrique étant conférée par la présence d'un noir de carbone adapté.

Le brevet US 5 017 118 décrit un appareillage de coextrusion comportant une unique extrudeuse qui possède plusieurs canaux d'écoulement débouchant respectivement sur un orifice formé par des lames d'extrusion. Ainsi comme montré sur les figures 7 et 8 du document, l'insert 120 parallèlement aux mélanges 114, 118 et 122 arrive par un canal d'écoulement dans l'orifice 94 formé par les lames 106 et 98 sur la surface 116 du rouleau.

Si une telle solution est parfaitement viable pour un pneumatique comportant une bande de roulement constitué d'un seul et même mélange non conducteur, par exemple une bande de roulement de véhicule de tourisme, il n'en est pas de même dans le cas d'un pneumatique comportant plusieurs couches de mélanges caoutchouteux au-dessus de l'armature de sommet et des couches de caoutchouc entre l'armature de sommet et l'armature de carcasse, comme tel est le cas de tout pneumatique susceptible de rouler avec une température de fonctionnement stabilisée élevée, comme les véhicules lourds, les véhicules rapides.

En effet, si pour des raisons quelconques, on est amené à doter un tel pneumatique d'une couche, ou partie intérieure de la bande de roulement (partie non en contact avec le sol), non conductrice, entre armature de sommet et partie extérieure (partie en contact avec le sol) de la bande de roulement rendue conductrice par la présence d'un insert circonférentiel ou zébrure, ladite partie intérieure devra être rendue conductrice. De même, une couche entre armature de carcasse et armature de sommet, présentant des surépaisseurs notoires dans les régions des bords de nappes de sommet, devra aussi être rendue conductrice si elle ne l'est pas initialement.

Une première solution, pour obtenir une bande de roulement conductrice, consiste à coextruder les parties intérieure et extérieure de la bande de roulement, et à munir l'ensemble ainsi constitué d'un insert circonférentiel conducteur. Ladite solution n'est pas satisfaisante pour plusieurs raisons ; on peut en citer deux : dans le type de pneumatique considéré, l'épaisseur totale de la bande de roulement est trop importante ; par ailleurs, il peut être intéressant que les inserts conducteurs, respectivement des couches intérieure et extérieure de la bande de roulement, ne soient pas réalisés avec la même qualité de mélange caoutchouteux.

Une autre solution consiste, comme décrit dans le demande française FR 97/02276 de la demanderesse, à assurer la connexion électrique entre deux couches conductrices ou rendues conductrices, séparées par une couche non conductrice, par au moins une bande de mélange caoutchouteux de faibles épaisseur, largeur et longueur, posée entre les deux faces de la soudure de la couche non conductrice, et en contact avec les moyens rendant conductrices les deux couches reliées par la connexion. Bien que satisfaisante industriellement, ladite méthode nécessite une pose de produit supplémentaire, et entraîne un coût de fabrication additionnel.

Une troisième solution consiste à doter chaque partie non conductrice d'un insert circonférentiel à tracé rectiligne circulaire ou zébrure circulaire après extrusion de ladite partie par des moyens usuels d'extrusion et à réunir ensuite les deux produits entre eux avant pose sur l'armature de sommet. Dans la mesure où les zébrures sont généralement très fines afin de ne pas perturber les propriétés physiques des compositions constituant les deux parties de la bande de roulement, l'épaisseur de ces inserts étant, sur le pneumatique vu en section transversale, de l'ordre de 0,01 à 2,0 mm, une telle solution nécessite que la trace de la zébrure de la partie extérieure de la bande de roulement sur la paroi de contact entre les deux parties soit parfaitement alignée avec ou centrée sur la trace sur ladite paroi de la zébrure de la partie intérieure de la même bande de roulement.

Par ailleurs, les propriétés mécaniques des compositions de caoutchouc avant vulcanisation sont très mauvaises, le mélange de caoutchouc cru pouvant se présenter comme une pâte extrêmement molle ou à l'inverse comme un agglomérat extrêmement dur. Quelle que soit la manière de travailler de tels mélanges, il est difficile de maîtriser parfaitement la géométrie du semi-produit fini qu'est l'ensemble des deux parties non vulcanisées de la bande de roulement : la concordance. l'alignement entre les traces respectives des deux zébrures sur la paroi de contact entre les deux parties présentent de grandes difficultés de mise au point, la solution de deux zébrures circulaires ne pouvant être considérée comme structurellement optimisée et comme industriellement viable. tant du point de vue coût que performances obtenues.

Aussi si l'un des buts de l'invention est de dissiper, dans un pneumatique ayant plusieurs mélanges non conducteurs de l'électricité, les charges électrostatiques induites par le roulage du pneumatique, sans significativement affecter le niveau des propriétés du pneumatique, l'autre but est de pouvoir obtenir un pneumatique le plus simplement possible et de moindre coût, que ce soit coût matière et/ou coût de fabrication.

L'invention propose, selon un premier aspect, un pneumatique comportant au moins deux couches de mélanges caoutchouteux non conducteurs de l'électricité, les dites deux couches ayant une paroi commune de contact, caractérisé en ce que chaque couche contient un insert circonférentiel de mélange conducteur, à tracé rectiligne circulaire, l'insert d'au moins une première couche présentant, vu en section transversale, une surface S à deux bases, une première base, sur la paroi de contact entre les deux couches, ayant une largeur au moins égale à 10 fois la largeur de la première base sur ladite surface de contact de la surface S' de l'insert de la deuxième couche, les dites premières bases étant sur la paroi commune de contact en regard l'une de l'autre, et les axes moyens des deux bases en regard étant parallèles au et distants du plan équatorial du pneumatique de quantités, dont la différence est au plus égale à la demi-largeur de la première base de la première couche, de sorte qu'il y ait circonférentiellement entre les deux tracés sur la paroi commune de contact plusieurs points de contact assurant la connexion électrique entre deux éléments conducteurs.

Dans la très grande majorité des cas, les deux couches non conductrices seront les parties intérieure et extérieure de la bande de roulement, et la connexion électrique doit être assurée entre le sol et l'armature de sommet, composée de câbles métalliques calandrés dans un mélange de caoutchouc rendu conducteur par la présence dans sa composition de noir de carbone. Les couches non conductrices peuvent être aussi, d'une part la partie axialement externe du profilé de forme transversale triangulaire séparant l'armature de carcasse d'un bord d'armature de sommet, et d'autre part les parties intérieure et extérieure de bande de roulement, la connexion devant être assurée entre les trois couches.

De manière préférentielle, et dans le cas d'une bande de roulement, l'une des parties de ladite bande, et plus particulièrement la partie extérieure de bande de roulement sera munie d'un insert possédant une surface transversale à deux bases de largeurs différentes, la première base ayant une largeur très supérieure à la largeur de la deuxième base se trouvant sur la surface de bande de roulement, alors que l'autre partie, préférentiellement la partie intérieure de bande de roulement, sera pourvue d'une zébrure dont la surface transversale est rectangulaire, les deux bases de ladite surface étant égales.

La surface transversale de l'insert comprenant deux bases de largeurs différentes, peut avoir plusieurs formes. De manière avantageuse et de façon à avoir le moins possible de matière conductrice, en particulier dans les couches de bande de roulement du pneumatique, la surface transversale de l'insert de la couche extérieure de bande de roulement aura une forme de T renversé, avec une partie rectangulaire de faible largeur, et une partie triangulaire ou rectangulaire avec une base de forte largeur, base sur la paroi commune des deux couches.

Une couche, que ce soit une partie de bande de roulement ou un profilé intermédiaire entre armature de carcasse et armature de sommet, peut être, par exemple, obtenue à l'état non vulcanisé au moyen d'une extrusion dans une extrudeuse que l'on dénomme, de manière connue, extrudeuse nez à rouleau, le profil ou section du produit extrudé étant défini d'une part par la surface du rouleau sur lequel le mélange caoutchouteux est extrudé et d'autre part par la paroi fixe d'une lame d'extrusion qui coopère avec ladite surface pour délimiter un orifice d'extrusion. Le procédé, conforme à l'invention, destiné à obtenir un ensemble de deux couches conductrices, par exemple les parties intérieure et extérieure d'une bande de roulement pour pneumatique, consiste :
∗ à extruder séparément chaque couche, sur un extrudeuse comprenant une tête d'extrusion pourvue d'un canal d'écoulement débouchant sur un orifice d'extrusion comportant une paroi fixe coopérant avec un rouleau rotative
∗ à insérer par coextrusion dans chaque couche, par exemple chaque partie de la bande de roulement, une zébrure de mélange conducteur à l'état non vulcanisé, circonférentielle et avec une surface transversale à deux bases, au moyen de la buse d'une micro-extrudeuse, ladite buse étant fixe et appliquée contre une paroi dudit appareil d'extrusion, par exemple la paroi du rouleau de l'appareil d'extrusion principal, et
∗ à réunir par les moyens habituels les deux couches non vulcanisées.

La coextrusion peut être réalisée avantageusement à trois endroits différents : soit dans le canal d'écoulement entre la voûte supérieure et la voûte inférieure délimitant ledit canal, soit entre la voûte supérieure et la paroi du rouleau rotatif, soit entre la paroi supérieure de l'orifice d'extrusion et la paroi du rouleau. Les appareillages. conformes à l'invention et destinés à la mise en oeuvre du procédé d'obtention d'un profilé de caoutchouc avec insert ou zébrure de section transversale à deux bases, sont de deux sortes.

L'appareillage de la première sorte comprend une extrudeuse principale avec nez à rouleau pour extruder la couche ou profilé de caoutchouc, par exemple, la partie supérieure d'une bande de roulement non vulcanisée, et une micro-extrudeuse, montée fixement sur un support et comprenant principalement une tête d'extrusion, munie à son extrémité d'une buse, destinée à extruder, selon les profil et trace désirés, l'insert circonférentiel dans le profilé de mélange non vulcanisé sortant de l'extrudeuse principale, la tête d'extrusion et la buse étant placées dans le canal d'écoulement ou chambre d'accumulation du caoutchouc à extruder soit entre la voûte supérieure et la voûte inférieure de l'extrudeuse principale, soit entre la voûte supérieure et le rouleau rotatif, la buse ayant une tête dont l'extrémité est plaquée contre la voûte inférieure ou contre le rouleau de l'extrudeuse principale. L'invention concerne aussi la buse ou orifice d'extrusion de la micro-extrudeuse utilisée. Ladite buse est caractérisée en ce qu'elle comprend une pièce annulaire d'appui et d'attache au nez de la micro-extrudeuse avec les éléments d'attache nécessaires à la fixation, une chambre d'alimentation creuse et cylindrique, droite ou coudée, présentant sur sa surface cylindrique un orifice d'extrusion, par lequel est extrudée la matière caoutchouteuse conductrice et occupant sensiblement toute la hauteur de ladite buse et dont la section transversale a une forme adaptée à la section désirée de l'insert conducteur : section à deux bases de largeurs différentes s'il s'agit de l'extrusion d'un insert à deux bases différentes, ou section à deux bases de largeurs égales s'il s'agit de l'extrusion d'un insert à section rectangulaire.

L'appareillage de la deuxième sorte comprend de même une extrudeuse principale, avec nez à rouleau ou nez plat, pour extruder la couche ou profilé de caoutchouc, par exemple, la partie intérieure d'une bande de roulement non vulcanisée, et une micro-extrudeuse comprenant principalement une tête d'extrusion, munie à son extrémité d'une buse, destinée à extruder, selon les profil et trace désirés, l'insert circonférentiel dans le profilé de mélange non vulcanisé sortant de l'extrudeuse principale. L'invention concerne plus particulièrement la fixation de la micro-extrudeuse et la buse ou orifice d'extrusion de la micro-extrudeuse utilisée. La micro-extrudeuse, ou du moins sa tête d'extrusion en partie, est insérée et fixée dans la partie supérieure de la lame d'extrusion, ladite tête d'extrusion étant coudée à son extrémité pour permettre l'application de la buse contre le rouleau ou contre la partie inférieure de la lame d'extrusion, selon le type d'extrudeuse principale utilisée.

Ladite buse est caractérisée en ce qu'elle comprend une pièce annulaire d'appui et d'attache au nez de la micro-extrudeuse avec les éléments d'attache nécessaires à la fixation, une chambre d'alimentation creuse et cylindrique, munie sur la surface cylindrique d'un orifice d'extrusion par lequel est extrudée la matière caoutchouteuse conductrice et à section choisie selon la forme transversale désirée de l'insert conducteur. Dans cet appareillage de deuxième sorte, la buse d'extrusion est avantageusement pourvue d'une filière mobile en translation selon un axe sensiblement perpendiculaire à l'axe du rouleau, et permettant sous l'action de la pression du mélange conducteur qui la traverse, d'assurer la fabrication de produits d'épaisseurs différentes, tout en garantissant, pendant leur fabrication un écart minimal entre l'extrémité de la buse et le rouleau de l'extrudeuse principale.

Les caractéristiques de la présente invention seront mieux comprises à l'aide du dessin annexé à la description qui suit, dessin sur lequel.
- la figure 1A représente schématiquement, vu en perspective, la partie sommet d'un pneumatique à bande de roulement non conductrice, alors que la figure 1 B est une vue en plan d'une partie de la bande de roulement dudit pneumatique,
- la figure 2 représente les principales composantes d'un appareil utilisé, conforme à l'invention.
- la figure 3 est une vue agrandie de l'appareil selon la figure 3,
- les figures 4 et 5. représentent les composantes d'autres appareils d'extrusion susceptibles d'être utilisés pour la formation d'un insert conducteur,
- la figure 6 est une vue agrandie d'une buse d'extrusion pouvant être utilisée sur l'appareil de la figure 5.

Le pneumatique, de dimension 315/80.R.22.5, conçu pour avoir une basse résistance au roulement, comprend une armature de carcasse (1), composée d'une nappe métallique formée de câbles métalliques inextensibles enrobés dans un mélange de calandrage caoutchouteux, rendu conducteur des charges électrostatiques par l'intermédiaire d'un noir de carbone couramment utilisé comme charge renforçante dans les mélanges. Ladite armature de carcasse (1) est, comme connue, ancrée à au moins une tringle dans chaque bourrelet pour former un retournement (non montrés). A l'intérieur de ladite armature de carcasse (1) se trouvent les couches usuelles de renfort, et les couches dites intérieures constituées de mélanges généralement imperméables aux gaz de gonflage connus. La(les) extrémité(s) de cette(ces) couche(s) intérieure(s) est(sont) généralement recouverte(s) par la partie axialement interne de la couche protectrice du bourrelet (non montrée), couche d'usure dont la partie axialement externe vient prendre appui sur la jante de montage, ladite couche étant généralement très chargée en noir de carbone, donc fortement conductrice.

L'armature de carcasse (1) est surmontée en son sommet d'une armature de sommet, composée, dans l'exemple décrit, de deux demi-nappes dites de triangulation (20) formées de câbles métalliques inextensibles orientés par rapport à la direction circonférentielle d'un angle pouvant être compris entre 30° et 90° ; puis radialement au-dessus, de deux nappes (21) et (22) dites de travail composées de câbles métalliques inextensibles croisés d'une nappe à la suivante en faisant avec la direction circonférentielle des angles pouvant être égaux ou inégaux et de valeur absolue comprise entre 10° et 30° ; puis généralement, en dernier lieu d'au moins une nappe (23) dite de protection formée de câbles élastiques faisant avec la direction circonférentielle un angle égal en sens et valeur à l'angle de la nappe de travail radialement la plus à l'extérieur. Tous les câbles de cette armature de sommet (2) sont enrobés dans un ou plusieurs mélange(s) de calandrage caoutchouteux, conducteur(s) des charges électrostatiques grâce à un noir de carbone couramment utilisé comme charge renforçante dans les mélanges.

L'armature de sommet (2), ne possédant pas le même profil transversal que celui de l'armature de carcasse (1) sous-jacente, est séparée de ladite armature de carcasse (1) par un ensemble caoutchouteux de faible épaisseur sur la partie axiale centrale (61), où les deux armatures sont sensiblement parallèles et, de part et d'autre de ladite partie centrale (61). d'épaisseur croissante en allant vers l'extérieur du pneumatique pour former des coins ou profilés triangulaires (62). Pour des raisons d'échauffement, les dits coins (62) de caoutchouc et la partie axiale (61) ne sont pas réalisés avec des mélanges de caoutchouc conducteurs, car très peu chargés en noir de carbone. Radialement au-dessus de l'armature de sommet (2) est disposée la bande de roulement (3) composée de la couche radialement intérieure (31), dite sous-couche, formée de mélange chargé majoritairement par de la silice, sous-couche (31) elle-même surmontée radialement de la couche radialement extérieure (32), ou couche de roulement, très fortement chargée en silice. La bande de roulement (3) est reliée aux bourrelets par les mélanges de llancs (4), eux aussi très fortement chargés en silice.

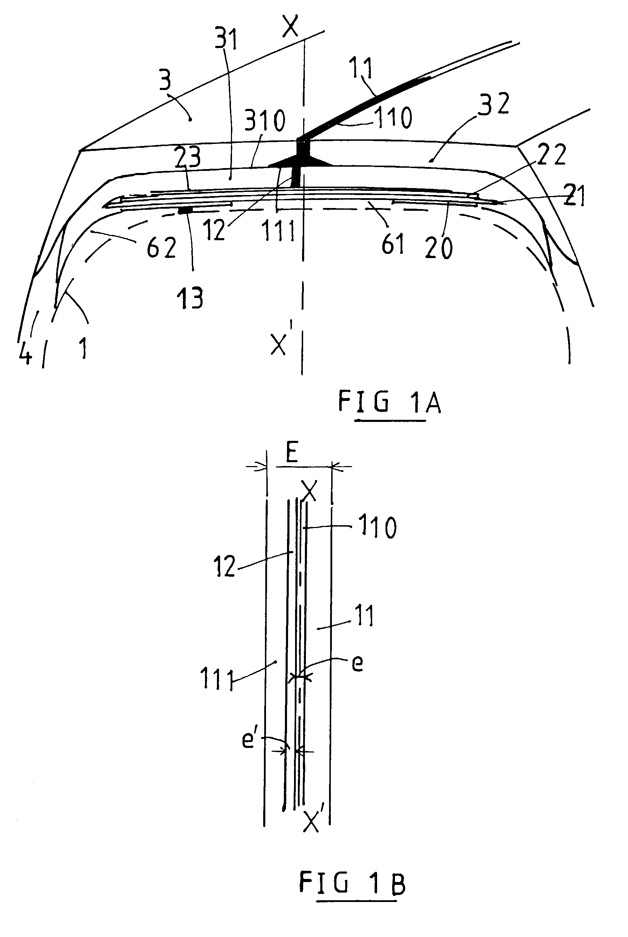

La couche de roulement (32) est rendue conductrice au moyen de l'insert caoutchouteux (11), se présentant sous forme d'un anneau circonférentiel sur toute la hauteur de la couche de roulement (32) pour relier la surface de la bande de roulement venant en contact avec le sol avec la face radialement supérieure (310) de la sous-couche (31). Cet insert (11) de très faible largeur axiale e sur la surface de bande de roulement, égale à 0,5 mm, est. dans le cas montré, unique et centré théoriquement sur le plan équatorial XX' du pneumatique, et sa trace sur la surface de contact (310) entre les deux parties (31) et (32) de bande de roulement est rectiligne et circulaire. L'insert (11) pourrait être décentré, en particulier dans le cas de la présence sur la bande de roulement d'une rainure centrale ; il pourrait y avoir deux inserts (11), placés par exemple symétriquement par rapport au plan équatorial, ou plus, mais de toute manière placés axialement de sorte que le contact avec le sol puisse être établi quelque soit le taux d'usure de la bande de roulement. Cet insert, vu en section transversale, présente une surface à deux bases (110) et (111). la base (110) étant la base de faible largeur e sur la surface de bande de roulement. Quant à l'autre base (111). sur la surface de contact entre les deux parties (31) et (32) de la bande de roulement, elle est comparativement très large puisque sa largeur E est égale, dans l'exemple décrit, à 20 mm, c'est-à-dire à 40 fois la largeur e, et la section transversale de l'insert (11) peut être considéré comme la superposition radiale d'une partie rectangulaire de faible largeur e et forte épaisseur à une partie rectangulaire de forte largeur E et faible épaisseur (figure 1B). La connexion électrique entre la couche de roulement (32) ou plus exactement entre 1'(les) insert(s) (11) et la nappe radialement extérieure (23) de l'armature de sommet (2), formée de câbles métalliques enrobés dans un mélange de caoutchouc chargé avec un noir de carbone usuel et conducteur, est réalisée par un insert circonférentiel (12) sur toute la hauteur de la partie (31) de bande de roulement, et dont le tracé de largeur e', sur la paroi de contact (310) entre les deux parties (31) et (32) de bande de roulement (3), est aussi circulaire, la largeur e' étant, dans le cas décrit, égale à la largeur e. La composition de caoutchouc constituant la connexion conductrice (12) des charges électrostatiques est, comme la composition de l'insert (11), à base d'un caoutchouc naturel et/ou de caoutchoucs synthétiques, habituellement utilisés dans la confection des pneumatiques et particulièrement des bandes de roulement, et ayant comme charge renforçante un noir de carbone conducteur de préférence usuellement utilisé dans la fabrication des pneumatiques. Comme montré sur les figures 1A et 1B, ledit insert (12) a, comme l'insert (11) un tracé ou trace, sur la surface de contact entre les deux couches (31) et (32), de forme circulaire et dont la surface transversale se présente comme une surface rectangulaire de largeur e' et de profondeur égale à l'épaisseur de la couche (31). Les inserts (11) et (12) ont sur la paroi de contact citée, des surfaces circonférentielles telle la surface de largeur e' est comprise dans la surface de largeur E, nettement plus importante. La disposition ainsi adoptée permet, après positionnement des deux parties de bande de roulement, que ce soit sur un tambour de confection de pneumatiques ou sur tout autre moyen de réunion des dites deux parties, d'avoir entre les deux inserts (11) et (12) en contact, quelles que soient les erreurs normalement admises de positionnement des deux parties de bande de roulement l'une par rapport à l'autre ou erreurs de centrage en fabrication (décalage des axes moyens des deux inserts (11) et (12) perceptible sur les figures 1A et 1B).

La connexion électrique entre l'armature de sommet (2) et l'armature de carcasse (1) se réalise, dans le cas décrit, par le moyen d'un insert (13) de section transversale rectangulaire et présentant sur la surface commune avec l'armature de carcasse et la surface commune avec l'armature de sommet des tracés rectilignes et circulaires de largeur e', égale à e et à 0,5 mm, ledit insert (13) pouvant être circonférentiellement, continu ou discontinu.

Le ou les inserts (11, 12) conducteurs de charges électrostatiques, du fait de leur composition caoutchouteuse à haute teneur en noir de carbone, peuvent être réalisés par tous moyens appropriés et ce, tant au moment de la confection du pneumatique à l'état non vulcanisé qu'après vulcanisation. Le ou les inserts conducteurs (11) peuvent être réalisés, par exemple, par extrusion durant la confection de la couche radialement supérieure (32) de la bande de roulement (3) à l'état non vulcanisé. Il en est de même des inserts (12) et (13) pour la couche radialement intérieure (31), obtenue de manière séparée par extrusion, ou pour la couche (6).

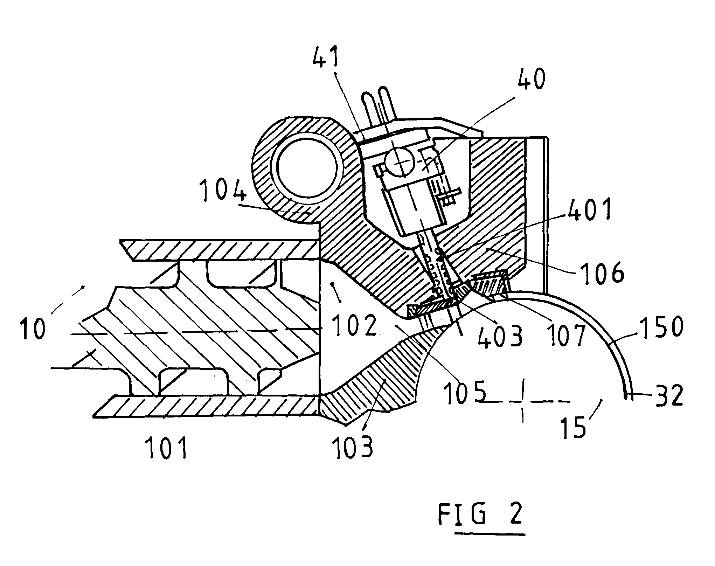

Sur la figure 2 est représentée une première extrudeuse (10) refoulant à l'aide de la vis d'extrusion (101) le mélange de caoutchouc non vulcanisé, destiné à la fabrication de la partie supérieure (32) de bande de roulement, dans une tête d'extrusion (102), délimitée par des voûtes supérieure (104) et inférieure (103), et comprenant un canal d'écoulement (105) amenant d'une part le mélange sur le rouleau rotatif (15), associé à l'extrudeuse (10), et d'autre part le dit mélange vers un orifice d'extrusion (107) délimité par la surface cylindrique (150) du rouleau (15) et la paroi fixe d'une lame (106), orifice d'extrusion permettant de conférer au mélange extrudé le profil souhaité. A ces premiers extrudeuse et rouleau est associée une micro-extrudeuse (40), montée de manière fixe sur un support (41). Cette extrudeuse, armée d'une vis (401) et d'une tête d'extrusion (402), comporte à son extrémité une buse (403) fixée au nez de la micro-extrudeuse (40), et destinée à extruder, selon des profil et trace désirés, l'insert circonférentiel (11) dans le profilé de mélange non vulcanisé et chaud sortant de l'orifice (107) de l'extrudeuse (10). Le support (41) est tel que la tête d'extrusion (402) et la buse (403) de ladite micro-extrudeuse soient placées dans le canal d'écoulement (105) de l'extrudeuse principale (10), en amont de l'orifice d'extrusion (107). Le mélange de caoutchouc conducteur est ainsi extrudé dans le flux de mélange non conducteur.

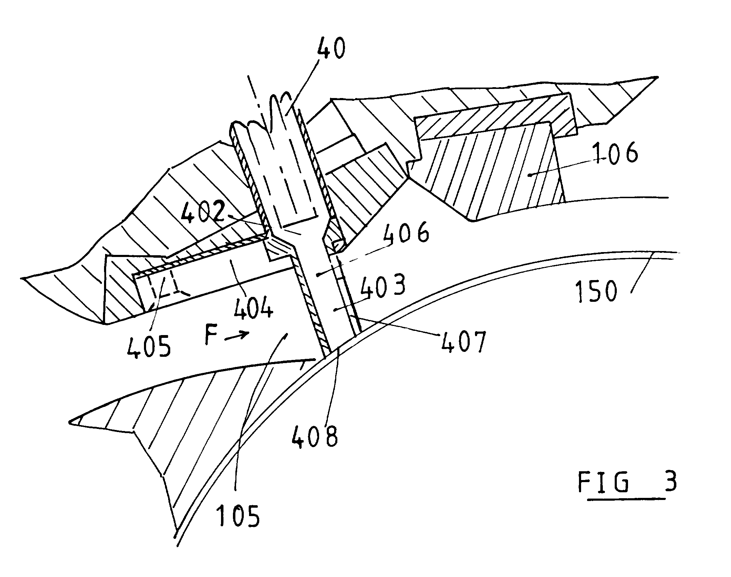

Comme montrée sur les figures 3, qui montre un agrandissement de la buse d'extrusion (403) de la micro-extrudeuse (40) de la figure 2, ladite buse (403) de la tête d'extrusion (402) placée dans le canal d'écoulement (105) de l'extrudeuse principale (10), comporte une pièce annulaire (404), permettant l'appui et l'attache de la buse au nez de la tête d'extrusion (402) de la micro-extrudeuse (40), du fait de la présence de plusieurs trous d'attache (405). Une chambre d'alimentation creuse et cylindrique (406) présente sur sa surface cylindrique un orifice d'extrusion (407), par lequel est extrudée la matière caoutchouteuse conductrice et occupant sensiblement toute la hauteur de ladite buse et dont la section transversale est une section à deux bases de largeurs différentes. La buse d'extrusion (403) est placée dans le canal d'écoulement (105) tel le flux d'écoulement F du mélange caoutchouteux à extruder par l'extrudeuse principale (10) frappe initialement le côté du corps creux opposé au côté où se trouve l'orifice d'extrusion. L'extrémité (408) de la buse (403) étant plaquée contre la surface (150) d'un rouleau d'extrusion (15) de l'extrudeuse principale (10), le mélange conducteur à extruder prend exactement la forme conférée par l'orifice d'extrusion.

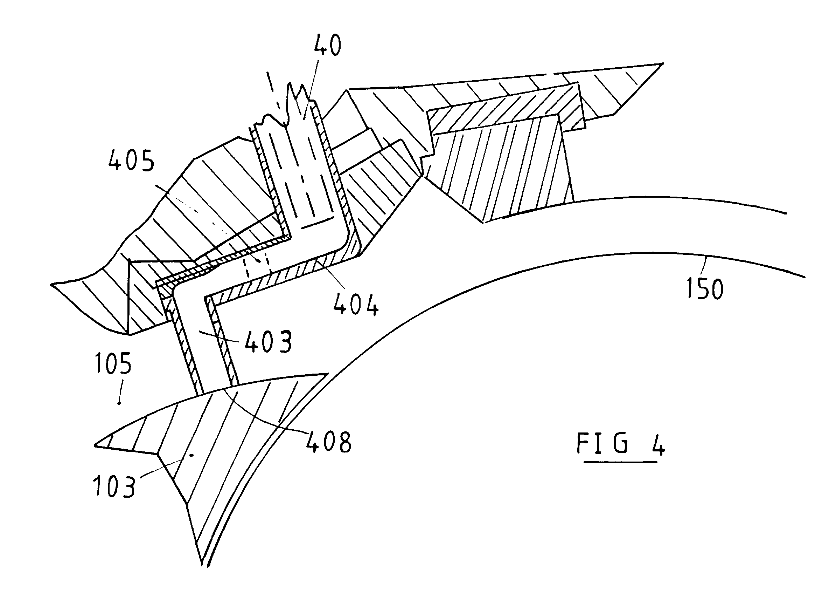

Quant à la buse (403) montrée sur la figure 4, elle diffère principalement de la buse de la figure 3 par le fait que la chambre d'alimentation de mélange conducteur a une forme coudée de sorte que l'extrémité (408) de la buse (403) soit plaquée, non pas contre le rouleau (15) de l'extrudeuse (10), mais contre la paroi de la voûte inférieure (103) de la tête d'extrusion (102) de ladite extrudeuse principale(10).

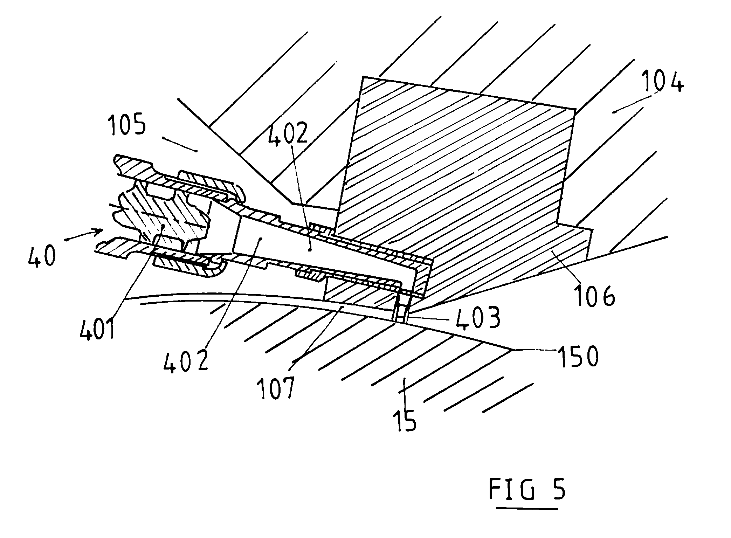

Sur la figure 5 sont seulement représentés la voûte supérieure (104), le canal d'écoulement (105) amenant le mélange vers un orifice d'extrusion (107), délimité par la surface cylindrique (150) du rouleau (15) et la paroi fixe d'une lame (106),et ainsi sur ledit rouleau rotatif (15), associé à l'extrudeuse (10), ledit orifice d'extrusion permettant de conférer au mélange extrudé le profil souhaité. A ces premiers extrudeuse et rouleau est associée une micro-extrudeuse (40), montée de manière fixe sur la lame d'extrusion (106). Cette extrudeuse, armée d'une vis (401) et d'une tête d'extrusion (402), comporte à son extrémité une buse (403) destinée à extruder, selon des profil et trace désirés, l'insert circonférentiel (12) dans le profilé de mélange non vulcanisé et chaud sortant par l'orifice (107) de l'extrudeuse (10). La tête d'extrusion (402) est coudée à son extrémité, de manière à ce que la buse d'extrusion (403), fixée au nez de la tête d'extrusion et placée dans l'orifice d'extrusion (107) de l'extrudeuse principale, puisse être appliquée contre la surface (150) du rouleau (15). Le mélange de caoutchouc conducteur est ainsi extrudé dans le flux de mélange non conducteur. Comme il est aisé de le comprendre, le principe de la fixation de la micro-extrudeuse sur la lame d'extrusion de l'extrudeuse principale s'applique aussi de manière avantageuse à une extrudeuse à nez plat, ladite extrudeuse se différenciant de la précédente par le fait qu'il n'existe plus de rouleau, et que l'orifice d'extrusion (107) est délimité par les parois inférieure et supérieure de la lame d'extrusion (non montrée).

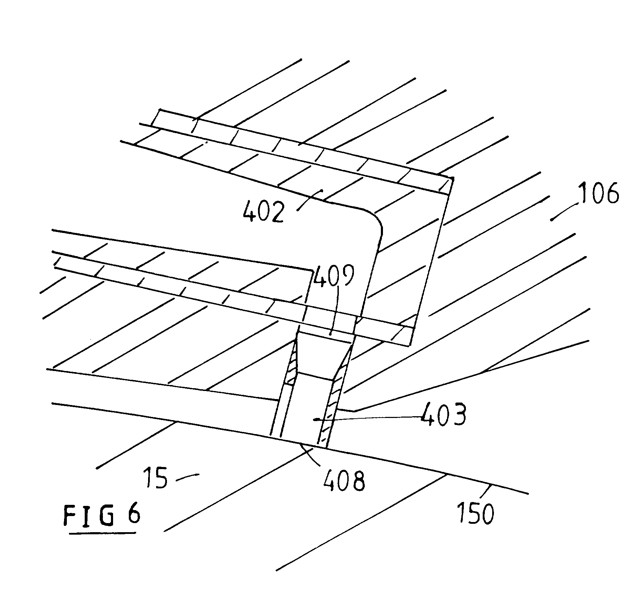

La figure 6 montre, en agrandissement, une buse d'extrusion (403) à filière mobile utilisée avec la micro-extrudeuse de la figure 5, ladite filière étant en position de contact avec le rouleau de l'extrudeuse principale. La lame d'extrusion (106) reçoit dans un alésage perpendiculaire à la tête d'extrusion (402) la buse (403) à filière mobile , fendue suivant une section appropriée sur une partie de sa hauteur. Le contact entre la base (408) de la buse à filière mobile (403) et la paroi (150) du rouleau (15) est maintenu par la pression du mélange conducteur agissant sur la section (409), ce qui permet éventuellement l'extrusion du mélange conducteur en discontinu.

## Revendications

1. Appareillage, pour la mise en oeuvre du procédé d'obtention d'une partie de bande de roulement conductrice d'électricité au moyen d'un insert de mélange conducteur, comprenant une extrudeuse (10) avec nez à rouleau (15) pour extruder la partie (31, 32) de bande de roulement (3) non vulcanisée, caractérisé en ce qu'il comprend en outre une micro-extrudeuse (40), montée fixement sur un support (41) et comprenant principalement une tête d'extrusion (402), munie à son extrémité d'une buse (403), destinée à extruder, selon les profil et tracé désirés, l'insert circonférentiel (12, 11) dans la partie de mélange non vulcanisé sortant de l'extrudeuse principale, la buse (403) étant placée dans l'espace compris entre la partie supérieure fixe de l'extrudeuse principale (10) et la partie inférieure lui faisant face et dans lequel le mélange caoutchouteux à extruder s'écoule avant d'être libéré, l'extrémité de la buse (403) étant appliquée contre ladite partie inférieure, de sorte que les directions du flux du mélange conducteur dans la buse et du flux du mélange non conducteur dans ledit espace soient sécantes.

2. Appareillage selon la revendication 1, caractérisé en ce que la partie supérieure fixe de l'extrudeuse principale (10) est la voûte supérieure (104) de ladite extrudeuse et la partie inférieure la paroi (150) du rouleau (15) en amont de l'orifice d'extrusion de l'extrudeuse (10).

3. Appareillage selon la revendication 1, caractérisé en ce que la partie supérieure fixe de l'extrudeuse principale (10) est la voûte supérieure (104) de ladite extrudeuse et la partie inférieure la voûte inférieure (103) en amont de l'orifice d'extrusion (107) de l'extrudeuse (10).

4. Appareillage selon la revendication 1, caractérisé en ce que la partie supérieure fixe de l'extrudeuse (10) est la partie supérieure de la lame d'extrusion (106) et la partie inférieure la paroi (150) du rouleau (15) en amont de l'orifice d'extrusion.

5. Appareillage selon la revendication 4, caractérisé en ce que l'extrudeuse (10) avec nez à rouleau (15) est remplacée par une extrudeuse (10) avec nez plat, la partie inférieure faisant face à la partie supérieure de la lame d'extrusion (106) étant la partie inférieure de ladite lame d'extrudeuse principale (10).

6. Buse d'extrusion (403) d'une micro-extrudeuse (40) de l'appareillage selon la revendication 1, caractérisée en ce qu'elle comprend une pièce annulaire (404) permettant l'appui et l'attache de la buse au nez de la tête d'extrusion (402) de la micro-extrudeuse (40), du fait de la présence de plusieurs trous d'attache (405), une chambre d'alimentation creuse, cylindrique et droite (406), présentant sur sa surface cylindrique un orifice d'extrusion (407), par lequel est extrudée la matière caoutchouteuse conductrice, occupant sensiblement toute la hauteur de ladite buse et dont la section transversale est une section à deux bases de largeurs différentes, l'extrémité ou base (408) de la buse (403) étant plaquée tangentiellement contre la partie inférieure faisant face à la partie supérieure de l'extrudeuse principale (10).

7. Buse d'extrusion (403) d'une micro-extrudeuse (40) de l'appareillage selon la revendication 3, caractérisée en ce qu'elle est à filière mobile, fendue sur une partie de sa hauteur et insérée dans un alésage perpendiculaire à la tête d'extrusion (402), la base de ladite buse étant maintenu en contact avec la paroi (150) du rouleau (15) par la pression du mélange conducteur extrudé.
